# EUROPÄISCHE PATENTANMELDUNG

(11) **EP 0 731 476 A1**
(43) Veröffentlichungstag der Anmeldung: **11.09.1996**
(21) Anmeldenummer: 96103354.5
(22) Anmeldetag: 04.03.1996
(51) Int. Cl.: H01G 4/236

(54) **Elektrischer Kondensator**

(30) Priorität: 06.03.1995 DE 19507696
(71) Anmelder: SIEMENS MATSUSHITA COMPONENTS GmbH & CO KG, D-81541 München (DE)
(72) Erfinder: Vetter, Harald, Dipl.-Ing. (FH), 89520 Heidenheim (DE)
(74) Vertreter: Fuchs, Franz-Josef, Dr.-Ing.

(57) **Zusammenfassung**

Ein elektrischer Kondensator, insbesondere Leistungskondensator, ist in ein gas- und/oder öldicht verschlossenes Gehäuse eingebaut. Das Gehäuse besitzt für die Kondensatoranschlüsse montierbare Durchführungen (1), die aus gegen das Gehäuse elektrisch isolierten Metallbolzen (3) sowie Isolatoren (4) zur Erhöhung der Kriechstrecke bestehen. Der Isolator (4) der Durchführung (1) besitzt einen in das Innerere des Gehäuses reichenden Abschnitt (8) an dem ein Gegenstück (10) befestigt ist, das die Durchführung (1) durch Verspannung mit dem Gehäuse verbindet.

## Beschreibung

Die Erfindung betrifft einen elektrischen Kondensator, insbesondere Leistungskondensator, der in ein gas- und/oder öldicht verschlossenes Gehäuse eingebaut ist, das montierbare Durchführungen für die Kondensatoranschlüsse aufweist, die aus gegen das Gehäuse elektrisch isolierten Metallbolzen sowie Isolatoren zur Erhöhung der Kriechstrecke bestehen.

Derartige Kondensatoren sind aus dem Stand der Technik bekannt, wobei dort der Metallbolzen als Gewindebolzen ausgebildet ist, der durch eine entsprechende Bohrung im beispielsweise Gehäusedeckel ins Innere des Gehäuses ragt, dort einen verbreiterten Flansch aufweist und durch Anziehen einer Mutter mit dem Gehäuse verspannt ist. Die Mutter ist dabei auf der Außenseite der Durchführung angeordnet, während im Inneren des Gehäuses ein Distanzstück für den richtigen Abstand beim Anziehen der Mutter sorgt.

Bei diesen Durchführungen soll ohne Schweiß- bzw. Löttechnik Öldichtheit durch einen Gummiring mit rechteckigem Querschnitt gewährleistet werden. Der Gummiring wird einerseits am Metallbolzen und andererseits an der zugeordneten Bohrung des Gehäusedeckels durch axiales Verspannen dicht gequetscht.

Schwierigkeiten bei dieser Ausführung resultieren daraus, daß der Gummiring infolge mechanischer, thermischer und gegebenenfalls chemischer Belastungen altert, so daß die erforderliche Abdichtung im Lauf der Zeit unter Umständen nicht mehr oder nur bedingt gewährleistet ist. Die Alterung von Gummiringen mit Rechteckquerschnitt ist bei hydraulischen Systemen bekannt und führt auch dort zu Undichtigkeiten. Wird das beschriebene System bei imprägnierten Kondensatoren eingesetzt, hat der Anwender den Vorteil, daß die Undichtigkeit durch heraustretendes Imprägniermittel signalisiert wird, so daß gegebenenfalls die Mutter nachgezogen werden kann.

Bei Kondensatoren, die mit Gasen imprägniert sind, ist die geschilderte permanente Kontrolle auf Undichtigkeiten nicht anwendbar, da hier kein flüssiges Imprägniermittel austreten kann.

Eine weitere Schwierigkeit bei der bekannten montierbaren Durchführung besteht darin, daß sie relativ weit in den aktiven Raum des Kondensators hineinragt, so daß der Kondensator größere Abmessungen aufweist. Trotzdem besteht durch die unvermeidliche Alterung des Rechteck-Gummirings die Gefahr von Belag/Gehäuseisolationsfehlern im Bereich des Montagelochs.

Aufgabe der vorliegenden Erfindung ist es, den eingangs genannten Kondensator derart weiterzubilden, daß die montierbare gasdichte Durchführung neben ölimprägnierten auch bei Kondensatoren mit gasförmigen (trockenen) Imprägniermitteln in sicherer Weise einsetzbar ist, ohne daß die vorstehend angeführten Schwierigkeiten auftreten.

Diese Aufgabe wird erfindungsgemäß dadurch gelöst, daß der Isolator der Durchführung einen in das Innerere des Gehäuses reichenden Abschnitt besitzt an dem ein Gegenstück befestigt ist, das die Durchführung durch Verspannung mit dem Gehäuse verbindet.

Vorteilhafte Ausgestaltungen des Gegenstandes der Erfindung sind in den Unteransprüchen angeführt.

Die Erfindung wird im folgenden anhand von Ausführungsbeispielen erläutert.

In der dazugehörenden Zeichnung zeigen:
- Fig.1: eine Durchführung mit verschraubten Gegenstück,
- Fig.2: eine weitere Ausführungsform einer Durchführung mit verschraubten Gegenstück und
- Fig.3: eine Durchführung mit Snap-in Verspannung.

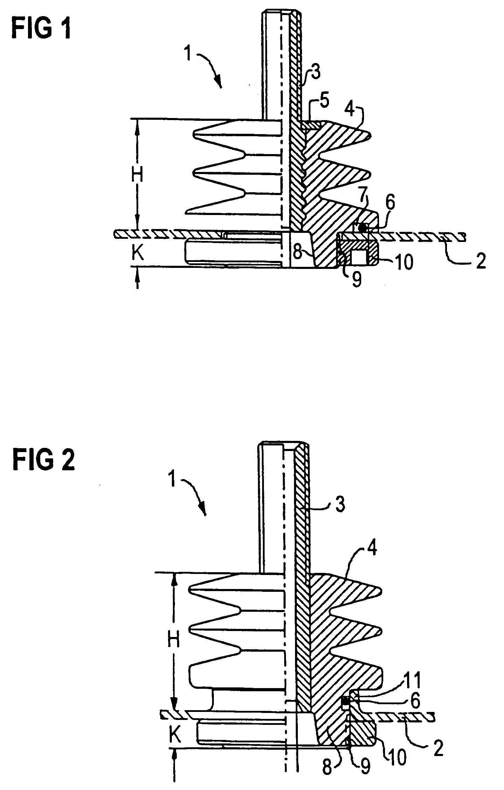

In der Fig.1 ist eine Durchführung 1 dargestellt, die im Deckel 2 eines metallischen Kondensatorgehäuses eingebaut ist. Die Durchführung 1 besteht aus einem metallischen Bolzen 3 mit Außengewinde und Durchgangsbohrung, alternativ mit Sackbohrung und gegebenenfalls -gewinde. Der Bolzen 3 wird von einem Isolator 4 dauerhaft und dicht umfaßt. Der Isolator 4 kann entweder aus Kunstharz und/oder Silikon (zur Vermeidung von unerwünschten Lunkern mittels Vakuumvergusses und/oder Vakuumentgasung und/oder Druckgelieren hergestellt) oder auch aus Polymerkeramik (in einer adäquaten Verfahrenstechnik verarbeitet) bestehen. Auf der Oberseite des Isolators 4 ist eine Scheibe 5 angeordnet, die gegebenenfalls entfallen kann, wenn am Bolzen 3 eine Auflagefläche angeformt ist. Scheibe 5 bzw. Auflagefläche dienen dabei als Auflage für Anschlußleitungen, die an die Durchführungen angeschraubt sind.

An der Verbindungsstelle Deckel 2/Isolator 4 ist umlaufend eine Dichtung durch einen O-Ring- 6 angeordnet. Der O-Ring 6 besteht aus einem entsprechend dem Anforderungsprofil des Kondensators gewähltem Werkstoff (mit geeignetem Vorhalt für Temperaturbeanspruchung, chemischer Belastung und Wärmedehnung) und ist im Einstich 7 plaziert. Der Isolator 4 besitzt ein in das Innere des Gehäuses reichenden Abschnitt 8 mit angeformtem Gewinde 9. Die Dichtheit gegenüber dem Deckel 2 erfolgt durch Verspannung des Isolators 4 mit einem Gegenstück 10, das mit dem Abschnitt 9, gegebenenfalls um Wärmedehnungen in axialer Richtung aufzufangen mit beigelegter Federscheibe zwischen Deckel 2 und Gegenstück 10, verschraubt wird. Das Gegenstück 10 besteht vorteilhafterweise aus demselben Werkstoff wie der Isolator 4, kann aber auch aus Metall gefertigt werden.

Die Verbindung zwischen Kondensator und Durchführung 1 ist nach dem bekannten Stand der Technik, wie zum Beispiel durch Löten, Schrauben, Klemmen, Schweißen, Nieten, Pressen o.dgl., hergestellt.

In der Fig.2 ist eine weitere Ausführungsform einer Durchführung 1 dargestellt, die sich vom Ausführungsbeispiel nach Fig.1 dadurch unterscheidet, daß der Deckel 2 einen nach oben gezogenen Rand 11 aufweist. In diesem Fall ist der O-Ring 6 seitlich am Isolator 4 angeordnet. Bei diesem Ausführungsbeispiel ist der Gewindebolzen 3 mit Sackbohrung und -gewinde versehen.

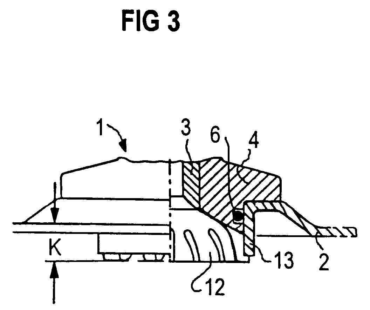

In der Fig.3 ist eine Ausführungsform dargestellt, bei der die Durchführung 1 (in der Fig. nur teilweise dargestellt) mittels einer Snap-in Konstruktion im Deckel 2 befestigt ist. Hierbei ist der Rand des Deckels 2 im Bereich der Durchgangsbohrung zunächst aufgebogen und weist einen Abschnitt 13 auf der ins Gehäuseinnere gerichtet ist. Die Verspannung zwischen Isolator 4/Gewindebolzen 3 erfolgt durch die selbsthemmende Federscheibe 12, die unter dem Rand 13 einrastet.

Bei den dargestellten Ausführungsbeispielen ist es auch möglich, den O-Ring-Einstich als Metalleinlegeteil auszubilden. Weiterhin kann anstelle des Gegenstücks 10 ein stärker ausgebildeter Fußflansch am Isolator 4 angeformt werden, der neben dem O-Ring-Einstich 7 z.B. umlaufend angeordnete Sackgewinde aufnimmt. Die Befestigung wird dann durch Festziehen von Schrauben am Gewindebolzen 3 gegen den Deckel 2 erreicht.

Der Abschnitt 8 des Isolators 4 kann bezüglich der Bauhöhe K minimiert werden. In Anwendungensfällen mit Forderungen nach extrem niedriger Eigeninduktivität des Kondensators kann daneben auch die Bauhöhe H minimiert werden, insbesondere durch Ausbildung des Bolzens 3 mit einer Auflagefläche.

Zur Steigerung der Dichtungssicherheit sind auch zwei oder mehrere O-Ring-Dichtungen möglich, oder es können Kombinationen zwischen O-Ring(en) und geeigneter Flachdichtung eingesetzt werden. Alternativ ist gegebenenfalls zusätzlich auch eine entsprechende Klebung verwendbar.

Eine weitere Ausführungsvariante kann durch einen angegossenen oder angesinterten Metallflansch realisiert werden, der entweder einen oder mehrere O-Ring-Einstiche besitzt, eine Kombination aus O-Ring/Flachdichtung zuläßt, oder ohne Dichtung nur eingeschweißt wird.

Das Snap-in Konzept kann neben der in Fig.3 dargestellten Ausführungsform mit selbsthemmender federförmiger Haltescheibe 12 auch entweder durch den Deckel 2, durch die Durchführung 1 oder durch ein scheibenförmiges Zusatzteil anstelle des Gegenstücks 10 verwirklicht werden.

Die Durchführung kann auch zu einem funktionsfähigen Kondensatordeckel weitergebildet werden. In diesem Fall ist der Deckel aus dem Kunststoff beziehungsweise der Polymerkeramik des Isolators gefertigt, wobei die Isolatoren mehrfach in das Isolationsmaterial des Deckels eingebettet sind. Die Anzahl der Durchführungbolzen (gebohrt oder ungebohrt) werden geeignet festgelegt und angeordnet. Die Dichtung zum Gehäuse der so abgewandelten multifunktionalen Durchführung erfolgt durch Kleben oder Fügen beziehungsweise Schweißen falls der Deckel zusätzlich angebrachte Metallteile besitzt.

## Patentansprüche

1. Elektrischer Kondensator, insbesondere Leistungskondensator, der in ein gas- und/oder öldicht verschlossenes Gehäuse eingebaut ist, das für die Kondensatoranschlüsse montierbare Durchführungen (1) aufweist, die aus gegen das Gehäuse elektrisch isolierten Metallbolzen (3) sowie Isolatoren (4) zur Erhöhung der Kriechstrecke bestehen,
**dadurch gekennzeichnet,**
daß der Isolator (4) der Durchführung (1) einen in das Innerere des Gehäuses reichenden Abschnitt (8) besitzt an dem ein Gegenstück (10) befestigt ist, das die Durchführung (1) durch Verspannung mit dem Gehäuse verbindet.

2. Elektrischer Kondensator nach Anspruch 1,
**dadurch gekennzeichnet,**
daß der Abschnitt (8) und das Gegenstück (10) mit einem Gewinde (9) versehen sind.

3. Elektrischer Kondensator nach Anspruch 1,
**dadurch gekennzeichnet,**
daß Isolator (4) und Gegenstück (10) mittels einer Snap-in Verbindung verspannt sind.

4. Elektrischer Kondensator nach einem der Ansprüche 1 bis 3,
**dadurch gekennzeichnet,**
daß der Isolator (4) mindestens einen Einstich (7) besitzt in welchem ein O-Ring (6) angeordnet ist.

5. Elektrischer Kondensator nach einem der Ansprüche 1 bis 4,
**dadurch gekennzeichnet,**
daß der Metallbolzen (3) eine Bohrung besitzt.

6. Elektrischer Kondensator nach Anspruch 5,
**dadurch gekennzeichnet,**
daß die Bohrung als Sackbohrung ausgebildet ist.

7. Elektrischer Kondensator nach einem der Ansprüche 1 bis 6,
**dadurch gekennzeichnet,**
daß die Isolatoren (4) mehrfach in Isolationsmaterial eingebettet sind.
